# EUROPEAN PATENT APPLICATION

(11) **EP 3 247 176 A1**
(43) Date of publication of application: **22.11.2017**
(21) Application number: 15877547.8
(22) Date of filing: 12.06.2015
(51) Int. Cl.: H05B 37/02

(54) **LIGHT CONTROL SYSTEM AND METHOD**

(30) Priority: 12.01.2015 CN 201510015424
(71) Applicant: Yutou Technology (Hangzhou) Co., Ltd., Hangzhou City, Zhejiang 311199 (CN)
(72) Inventor: YANG, Zhou, Hangzhou Zhejiang 311199 (CN)
(74) Representative: Lindner Blaumeier Patent- und Rechtsanwälte
(86) International application number: PCT/CN2015/081405
(87) International publication number: WO 2016/112631

(57) **Abstract**

The invention relates to the field of smart sensing and controlling field, more specifically, to a lighting control system and a method. The invention provides a lighting control system, which controls the light-emitting members through voice command, and acquires all the parameters of the environment where it is placed through collecting all types of sensor by itself searches the local data or data from the servers and algorithms, thereby judges if the current lighting environment offered by the light-emitting members is the optimum matching for the current environment, then adjusts all the settings automatically for creating the best effects on the basis of the current environment.

## Description

### BACKGROUND OF THE INVENTION

### 1. Field of the Invention

The invention relates to the field of smart sensing and controlling field, more specifically, to a lighting control system and a method.

### 2. Description of the Related Art

LED is a green light source. In contrast with incandescent lights and fluorescent lights, the energy efficiency of LED can reach to more than 90%. With the same brightness, the power consumption of LEDs is one tenth that of the ordinary incandescent lights and one second that of the fluorescent lights.

LED is driven by DC, without strobe, infrared, ultraviolet ray and radical pollution, with good color rendering property, good light directivity, good light-adjusting property, and not causing visual error; The calorific value of cold light source is very low, and can be touched safely, as result of that the LED shows a better quality than incandescent lights and fluorescent lights. LED can not only offering a comfortable lighting environment, but also meet the needs of the physical health of human being. LED is the healthy light source that protects eyes and nature.

LED has shown its unique advantage for the artistry of light color display lamp. The product of color LED covers the whole range of visible spectrum, and its monochromaticity and color purity is transcendent. With the good combination of red, green and yellow LED, it gives a large number of option for color and grey scale, with a spectrum of visual effects featuring 16.8 million colors.

There are multiple kinds of atmosphere generating LED products out in the markets. With multiple sets of LED units and a fine optical structure design, the products can generate a color atmosphere that ordinary lighting products can not generate. The products may also comprise wireless smart remotes, which can adjust the color and brightness and customize the change in light.

The prior method for LED device control, which can control the light color, brightness, projection direction, scattering range etc., is mainly achieved by using wired or wireless remotes. By using wireless transmission technology, such as Wi-Fi and/or Bluetooth technology, which connects the devices to other smart devices by the method of installing control software, can also control the LED devices. However, the self-adaption of the existing LED devices is not ideal enough, which means that the LED devices cannot adjust the upper mentioned parameters to a appropriate range through the environment where the LED devices is placed at by itself, and it is unwanted for the experts in the field.

China Patent Publication No. CN.103813586A relates to a lighting control system, comprising a handheld terminal, a main control module, a driving module and an LED lamp, , wherein the handheld terminal is used for selecting a needed lighting scene mode by a user, and sending the lighting scene mode to the main control module; the main control module is used for receiving the lighting scene mode information and sending a control command to the driving module according to the current and power information corresponding to the lighting scene mode; the driving module is used for receiving the control command, and adjusting the brightness of the LED lamp according to the control command; the driving module is further used for collecting the state information of real-time current and real-time power of the LED lamp and sending to the handheld terminal.

The hereinabove patent does not related to a technical feature of the LED device adjust the lighting parameter to a appropriate range through the environment by itself

### SUMMARY OF THE INVENTION

To solve the shortcoming of the prior art, the invention provides a lighting control system, applied for adjusting the light for a light-emitting member, comprising:
an environment collecting module;
a controller;
a server with a calculation module and a memory module for storing the control parameter which controls the light-emitting member;
the environment collecting module collecting the environment data and transmitting the environment data to the controller;
the controller searching data from the memory module on the basis of the environment data, and acquiring the control instruction for the light-emitting member through the calculation module, controlling the light-emitting member on the basis of the control instruction.

Preferably, the lighting control system further comprising:
a voice and semantic processing module;
the voice and semantic processing module collects the voice data, and analyzes the voice data to transmit a control instruction to the controller after acquiring the control instruction of the light-emitting member from the voice data;
the controller controls the lighting for the light-emitting member on the basis of the control instruction information.

Preferably, the lighting control system further comprising:
a wireless control unit;
when the voice and semantic processing module fails to collect the voice data, or fails to acquire the control instruction information for the light-emitting member from the voice data, the wireless control unit controls the light from the light-emitting member through the controller.

Preferably, the wireless control unit has a multi-touch human-computer interaction interface, the multi-touch human-computer interaction interface is provided with a switch, a brightness adjustment swipe, a color picker, an orientation adjustment for projection/reflection, a default preference setting and a smart start adjustment button.

Preferably, the voice and semantic processing module further comprising:
a speaker,if the voice and semantic processing module fails to analyze the control instruction information for the light-emitting member from the voice data, the speaker reminds recollecting the voice data;

Preferably, the environment data comprises the parameters of temperature, humidity, illumination and/or infrared ray in the environment where the light-emitting member is located.

Preferably, the controller records and monitors the operating state of the lighting control system, and stores the recorded and monitored data in the memory module.

Preferably, the lights of the light-emitting member is LED light group.

A method for the image recognition for the above-mentioned system, wherein the environment collecting module collecting the environment data and transmitting the environment data to the controller;
the controller searching data from the memory module on the basis of the environment data, and acquiring the control instruction information for the light-emitting member through the calculation module, controlling the light-emitting member on the basis of the control instruction information.

The upper mentioned lighting control method, wherein further comprising :
transmit the operating instructions to the controller through the voice and semantic processing module or the wireless control device;
the controller receives the operating instructions, and controls the lighting for the light-emitting member on the basis of the operating instructions.

The upper mentioned comprises the following advantages and benefits:
The invention provides a lighting control system, which controls the light-emitting members through voice command, and acquires all the parameters of the environment where they are placed through collecting all types of sensor by itself searches the local data or data from the servers and algorithms, thereby judges if the current lighting environment offered by the light-emitting members is the optimum matching for the current environment, then adjusts all the settings automatically for creating the best effects on the basis of the current environment.

### BRIEF DESCRIPTIONS OF THE DRAWINGS

The accompanying drawings, together with the specification, illustrate exemplary embodiments of the present disclosure, and, together with the description, serve to explain the principles of the present disclosure.
Figure 1 shows the schematic diagram of the voice control system of the invention;

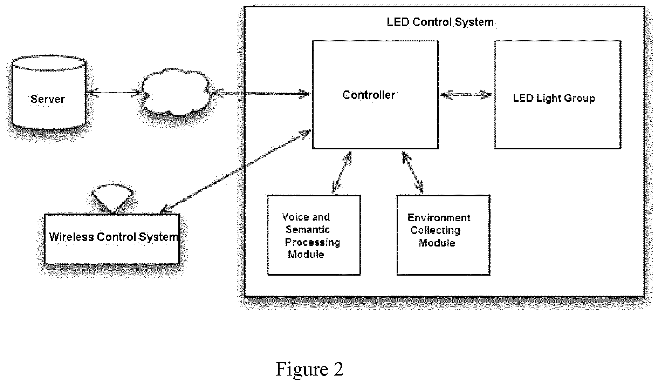

Figure 2 shows the schematic diagram of the complex control system of the invention;

### DETAILED DESCRIPTIONS

Hereinafter, certain exemplary embodiments according to the present invention will be described with reference to the accompanying drawings without limiting the scope of the invention.

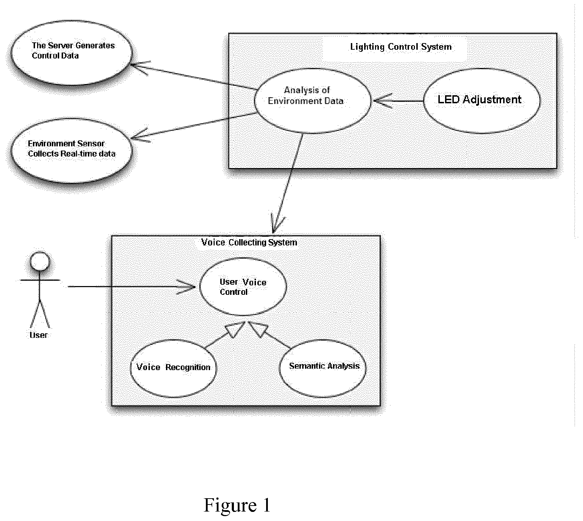

Referring to Figure 1, the lighting control system operates the lighting units through receiving the voice instructions passively from the users or the instructions come from the other wireless remote smart devices. When there are no direct passive instructions that has been sent, the system would actively acquire the data that benefits the control decision through the remote server, the users' wireless smart devices that have been connected, the environment collecting modules on the basis of the strategy which is configured in the system, then control the lighting units for the expected effect.

To understand the invention thoroughly, the following descriptions will be provided detail steps and structures so as to explain the technical solution for the invention. The preferred embodiment is described as follows. However, the invention has others further embodiments except for beyond the detailed description.

The method in the prior art for LED device controlling, which can control the light color, brightness, projection direction, scattering range etc., is mainly achieved by using wired or wireless remotes. By using wireless transmission technology, such as Wi-Fi and/or Bluetooth technology, which connects the devices to other smart devices by the method of installing control software, can also control the LED devices. However, the self-adaption of the existing LED devices is not ideal enough, which means that the LED devices cannot adjust the upper mentioned parameters to a appropriate range through the environment where the LED devices is placed at by itself.

To solve the shortcoming of the prior art, the invention provides a lighting control system, applied for adjusting the light for a light-emitting member, comprising:
an environment collecting module;
a controller;
a server with a calculation module and a memory module for storing the control parameter which controls the light-emitting member;

The environment collecting module collecting the environment data and transmitting the environment data to the controller;

The controller searching data from the memory module on the basis of the environment data, and acquiring the control instruction for the light-emitting member through the calculation module, and controlling the light-emitting member on the basis of the control instruction.

The lighting control system further comprising:
a voice and semantic processing module;
the voice and semantic processing module collects the voice data, and analyzes the voice data to transmit a control instruction information to the controller after acquiring the control instruction information to the light-emitting member from the voice data,;
the controller controls the lighting for the light-emitting member on the basis of the control instruction information.

The lighting control system further comprising:
a wireless control unit;
when the voice and semantic processing module fails to collect the voice data, or fails to acquire the control instruction for the light-emitting member from the voice data, the wireless control unit controls the light from the light-emitting member through the controller.

Through the invention, the server further comprises a updating over-the-air module, the updating over-the-air module updates in real time, which is used for pushing the latest software version of the device control software of the local devices, such as the ability of the voice and semantic processing module to proceed more vocabulary, which needs to replace the old version, and the updating over-the-air module will updates automatically.

Through the invention, the wireless control unit is an operational backup for the voice and semantic processing module, which is used to control the device by remote control when the user is away from the light-emitting member. The wireless control unit possesses a multi-touch human-computer interaction interface, which is similar to the relation between TV and TV remote. The wireless control unit controls the controller. After the controller received the instructions sent by the wireless control unit, the controller will control the specific operation of the light-emitting member. The multi-touch human-computer interaction interface is provided with a switch, a brightness adjustment swipe, a color picker, an orientation adjustment for projection/reflection, a default preference setting and a smart start adjustment button, which are used for the operation of the light-emitting member by remote control.

Preferably but not limited, this invention can connect wireless terminals, such as mobile phone, to the wireless control unit. By using an installed operating software on a mobile, the operating instructions are transmitted from the mobile phone to the wireless control unit wirelessly. The wireless control unit fetches the operating instructions and transmits the operating instructions to the controller, and then controls the LED light group.

Through the invention, the voice and semantic processing module can figure out the instructions from the voice of the user. For example, when the user utters 'gentle' voice, the voice and semantic processing module receives the signal and process it. After that, the generated data will be sent to the controller, and the controller will transmit the instructions to the light-emitting members after analysis for controlling the light-emitting member. If the voice instruction is vague, and the voice and semantic processing module fail to analyze the instructions, the speaker which connects to the voice and semantic processing module will send out the information, such as "please re-enter!" etc., and inform the user to give instructions again. If the instructions are concept ambiguity, the speaker will also inform user to give the instructions again, or give the user limited options to choose, until the user gives explicit instructions. Because the voice and semantic processing module has the ability to detect the acoustic wave, the voice and semantic processing module can also be used to predict the current action of the user through detecting the environment around.

Through the invention, the environment collecting module has the ability of acquiring the parameters of temperature, humidity, illumination and/or infrared ray in the environment where the light-emitting member is located. Cooperate with the memory module of the server, and control the light-emitting member automatically. The environment collecting module detects the environment around for the all the parameters, and transmits to the server. The parameters will be compared with some key parameters stored in the memory module. Once the result shows they are similar or identical, the instruction will be transmitted and control the light-emitting member automatically.

Through the invention, the controller receives all the parameters sent from all kinds of modules and compares them. For example, the environment collecting module detects the environment around the light-emitting member. The controller processes those instructions and search data from the memory module of the server, and then the specific instructions, which control the light-emitting member, will be calculated. After the controller analyzes the voice instructions transmitted from the voice and semantic processing module, the specific instruction will be obtained, and execute the voice operation to the light-emitting member. Moreover, the controller records and monitors the operating state of the lighting control system, and stores the recorded and monitored data in the memory module, maintains the life cycle of the other modules, receives and processes all kinds of data and requests which are sent from the server, and responds the requests.

Through the invention, the lights of the light-emitting member is LED light group. LED light group is a green light source. It has the advantage of energy saving, long service life, good adaptability (because a LED unit is small, any kind of shape can be made by LEDs), short responding time (the responding time of LEDs is in ns level, while ordinary lights is in ms level), environment protection (LEDs are poisonous metal-free, and the rejected materials are easy-recycled), colorful(the color from LEDs is pure, the spectrum range is narrow, and it can show the color of rainbow and white light through the mix color by the three basic color-red, green and blue).

The invention also provides a lighting control method, applied for adjusting the light for a light-emitting member, comprising:
using the environment collecting module collecting the environment data and transmitting the environment data to the controller;

The controller searching data from the memory module on the basis of the environment data, and acquiring the control instruction for the light-emitting member through the calculation module, and controlling the light-emitting member on the basis of the control instruction.

The upper mentioned method further comprising:
using the voice and semantic processing module or wireless control unit to transmit the operating instruction to the controller.
the controller receives the operating instructions, and controls the light for the light-emitting member on the basis of operating instruction.

In summary, The invention provides a lighting control system, which controls the light-emitting members through voice command, and acquires all the parameters of the environment where it is located, through collecting all types of sensor by itself searches the local data or data from the servers and algorithms, thereby judges if the current lighting environment offered by the light-emitting members is the optimum matching for the current environment, then adjusts all the settings automatically for creating the best effects on the basis of the current environment.

Through the description and the drawings, the specific structure of the detailed description and typical embodiment. While the present invention has been described in connection with certain exemplary embodiments, it is to be understood that the invention is not limited to the disclosed embodiments, but, on the contrary, is intended to cover various modifications and equivalent arrangements included within the spirit and scope of the appended claims, and equivalents thereof.

Any people skilled in the art can make possible changes and modifications, or equivalents thereof for the technical solution of the invention according to the above method without falling out of the scope of the invention. Therefore, the various modifications and equivalent arrangements without departing away from the technical solution of the invention are included within the spirit and the scope of the technical solution of the invention.

## Claims

1. A lighting control system, applied for adjusting the light for a light-emitting member, comprising:
an environment collecting module;
a controller;
a server with a calculation module and a memory module, for storing the control parameter which controls the light-emitting member;
the environment collecting module collecting the environment data and transmitting the environment data to the controller;
the controller searching data from the memory module on the basis of the environment data, and acquiring the control instruction for the light-emitting member through the calculation module, controlling the light-emitting member on the basis of the control instruction.

2. The lighting control system as claimed in Claim 1, wherein the lighting control system further comprising:
a voice and semantic processing module;
the voice and semantic processing module collects the voice data, and analyzes the voice data to transmit a control instruction information to the controller after acquiring the control instruction information of the light-emitting member from the voice data;
the controller controls the lighting for the light-emitting member on the basis of the control instruction information.

3. The lighting control system as claimed in Claim 2, wherein the lighting control system further comprising:
a wireless control unit;
when the voice and semantic processing module fails to collect the voice data, or fails to acquire the control instruction information for the light-emitting member from the voice data, the wireless control unit controls the light for the light-emitting member through the controller.

4. The lighting control system as claimed in Claim 3, wherein the wireless control unit has a multi-touch human-computer interaction interface, the multi-touch human-computer interaction interface is provided with a switch, a brightness adjustment swipe, a color picker, an orientation adjustment for projection/reflection, a default preference setting and a smart start adjustment button.

5. The lighting control system as claimed in Claim 2, wherein the voice and semantic processing module further comprising:
a speaker, if the voice and semantic processing module fails to analyze the control instruction information for the light-emitting member from the voice data, the speaker reminds recollecting the voice data;

6. The lighting control system as claimed in Claim 1, wherein the environment data comprises the parameters of temperature, humidity, illumination and/or infrared ray in the environment where the light-emitting member is located.

7. The lighting control system as claimed in Claim 1, wherein the controller records and monitors the operating state of the lighting control system, and stores the recorded and monitored data in the memory module.

8. The lighting control system as claimed in Claim 1, wherein the light-emitting member is LED light group.

9. A lighting control method, using a lighting control system for controlling the light-emitting member as claimed in any one of Claims 1-8, wherein the environment collecting module collecting the environment data and transmitting the environment data to the controller;
the controller searching data from the memory module on the basis of the environment data, and acquiring the control instruction information for the light-emitting member through the calculation module, controlling the light-emitting member on the basis of the control instruction information.

10. The method as claimed in Claim 9, wherein the method further comprising:
transmit the operating instructions to the controller through the voice and semantic processing module or the wireless control unit;
the controller receives the operating instructions, and controls the lighting for the light-emitting member on the basis of the operating instructions.
